# EUROPÄISCHE PATENTANMELDUNG

(11) **EP 2 071 693 A2**
(43) Veröffentlichungstag der Anmeldung: **17.06.2009**
(21) Anmeldenummer: 08021507.2
(22) Anmeldetag: 11.12.2008
(51) Int. Cl.: H02J 3/26, H02M 7/493

(54) **Verfahren und Schaltungsanordnung zum Steuern der Energieeinspeisung von mehreren einphasigen Wechselrichtern in ein Mehrphasennetz**

(30) Priorität: 12.12.2007 DE 102007060294; 11.06.2008 DE 102008027887
(71) Anmelder: Diehl AKO Stiftung & Co. KG, 88239 Wangen (DE)
(72) Erfinder: Halder, Wolfgang, 88299 Leutkirch (DE); Morent, Roland, 88239 Wangen (DE)
(74) Vertreter: Diehl Patentabteilung

(57) **Zusammenfassung**

Bei einem Verfahren zum Steuern der Energieeinspeisung von mehreren einphasigen Wechselrichtern (1 .. N) in ein Mehrphasennetz (MN) wird ermittelt, welcher der mehreren einphasigen Wechselrichter (1 .. N) welche Phase (R, S, T) des Mehrphasennetzes (MN) speist. So können die mehreren einphasigen Wechselrichter (1 .. N) unter Berücksichtigung ihrer ermittelten Phasen (R, S, T) in optimaler Weise so gesteuert werden, dass vorbestimmte Überwachungskriterien, wie beispielsweise eine maximal zulässige Schieflast zwischen den Phasen, des Mehrphasennetzes (MN) eingehalten werden.

## Beschreibung

Die vorliegende Erfindung betrifft ein Verfahren zum Steuern der Energieeinspeisung von mehreren einphasigen Wechselrichtern in ein Mehrphasennetz sowie eine Schaltungsanordnung mit mehreren einphasigen Wechselrichtern, die ausgangsseitig mit einem Mehrphasennetz verbunden sind, und insbesondere ein solches Verfahren und eine solche Schaltungsanordnung für eine Photovoltaikanlage.

Photovoltaikanlagen dienen der Einspeisung von elektrischem Strom in ein elektrisches Netz, wie zum Beispiel ein einphasiges 50Hz/230V-Spannungsnetz oder ein dreiphasiges 50Hz/400V-Spannungsnetz, zum Beispiel eines Energieversorgungsuntemehmens. Dazu weisen Photovoltaikanlagen üblicherweise einen oder mehrere Photovoltaikgeneratoren auf, die aus einem oder mehreren Solarmodulen bzw. Solarpaneelen bestehen, die wiederum eine Vielzahl miteinander verschalteter Solarzellen aufweisen. Der photovoltaisch erzeugte elektrische Strom wird dann einem oder mehreren Solarwechselrichtem zugeführt, welche die zugeführte Gleichspannung in eine geregelte standardisierte Netzspannung umwandeln. Dabei werden üblicherweise mehrere Solarmodule als so genannter String in Reihe geschaltet, um die vom jeweiligen Wechselrichter benötigte Eingangsspannung zu erreichen.

Es ist in der Technik allgemein bekannt, mehrere Maschinen, Geräte, Anlagen und dergleichen über einen Kommunikationsbus miteinander und mit einer zentralen Steuerung zu vernetzen. Die zentrale Steuerung dient dabei als Monitor für gemeldete Betriebsdaten und gibt ihrerseits Steuerbefehle an die Kommunikationspartner des Netzes oder führt Regelungen aus. Diese Technik hat sich auch bei dem Betrieb mehrerer Solarwechselrichter in einer Photovoltaikanlage bewährt.

Der Betrieb von Photovoltaikanlagen, die in das öffentliche Stromversorgungsnetz eines Energieversorgungsunternehmens einspeisen, unterliegt nationalen bzw. internationalen Vorschriften. Für das Gebiet der Bundesrepublik Deutschland müssen bei der Einspeisung von einer Photovoltaikanlage in ein Mehrphasennetz derzeit zum Beispiel die folgenden Kriterien eingehalten werden:
- Netzspannungsbereich:: 184 V bis 265 V
- Netzfrequenzbereich:: 49,8 Hz bis 50,2 Hz
- Impedanzsprung:: < 0,5 Ω
- Schieflast zwischen den Phasen:: maximal 4,6 kVA

Um diese Kriterien einzuhalten, werden in der Praxis zum Beispiel bei Ausfall eines Wechselrichters Gruppen von Solarwechselrichtem abgeschaltet. Dieses System ist nicht optimal, da bei Speisung zum Beispiel eines Dreiphasennetzes durch mehrere Wechselrichter die Abschaltung eines Gerätes genügen oder sogar keine Abschaltung notwendig sein kann.

Weiter beschreibt die DE 10 2006 003 904 A1 ein Verfahren zur Umwandlung einer Gleichspannung in eine dreiphasige Wechselspannung, bei dem die einphasigen Wechselrichter miteinander Ober externe Kabel kommunizieren. Fällt beispielsweise ein Wechselrichter aus, so werden die Leistungen der anderen Wechselrichter begrenzt, um zu große Schieflasten zwischen den Phasen des Mehrphasennetzes zu vermeiden. Dieses Verfahren soll eine Vereinfachung der dreiphasigen Spannungsüberwachung erlauben, ist aber insbesondere dann nicht optimal, wenn die Photovoltaikanlage mehr als drei Solarwechselrichter umfasst.

Die DE 10 2004 025 923 A1 offenbart eine Photovoltaikanlage mit mehreren Solarwechselrichtern zur Einspeisung in ein elektrisches Netz und einem zentralen Steuer- und Überwachungsgerät. Das zentrale Steuergerät enthält eine Schaltung ENS, über die alle Einspeisungen der Solarwechseirichter laufen, um die Phasen des Netzes zu überwachen. Bei Verletzung der durch den öffentlichen Stromversorger vorgegebenen Kriterien werden die Solarwechselrichter von dem zentralen Steuergerät über einen Kommunikationsbus zumindest kurzzeitig abgeschaltet. Für diese Überwachung müssen allerdings alle Einspeisungen von den Solarwechselrichtern in das Netz über die Schaltung ENS des zentralen Steuergeräts laufen.

Zudem zeigt die DE 10 2006 004 233 A1 eine Kommunikationsstruktur für Solarwechselrichter mit zwei Kommunikationsnetzen. Das erste Netz ist für Standard-LAN-Technologien mit schneller Datenübertragung auf kurzen Distanzen und das zweite Netz für störungsempfindliche Datenübertragungen über lange Distanzen geeignet.

Die vorliegende Erfindung hat die Aufgabe, ein verbessertes Verfahren und eine verbesserte Schaltungsanordnung zur Energieeinspeisung von mehreren einphasigen Wechselrichtern in ein Mehrphasennetz zu schaffen, mit denen die Kriterien für das öffentliche Stromversorgungsnetz auf einfache Weise eingehalten werden können.

Gemäß einem ersten Aspekt wird diese Aufgabe gelöst durch ein Verfahren mit den Merkmalen des Anspruchs 1. Vorteilhafte Ausgestaltungen und Weiterbildungen der Erfindung sind Gegenstand der abhängigen Ansprüche 2 bis 5.

Bei dem erfindungsgemäßen Verfahren zum Steuern der Energieeinspeisung von mehreren einphasigen Wechselrichtem in ein Mehrphasennetz wird ermittelt, welcher der mehreren einphasigen Wechselrichter welche Phase des Mehrphasennetzes speist. Die mehreren einphasigen Wechselrichter können so unter Berücksichtigung ihrer ermittelten Phasen optimal gesteuert werden, um die vorbestimmten Überwachungskriterien des Mehrphasennetzes einzuhalten.

Zur optimalen Steuerung der Wechselrichter werden neben deren aktuellen Betriebsdaten auch Informationen darüber benutzt, welcher Wechselrichter an welche Phase des Mehrphasennetzes angeschlossen ist. Zur Realisierung dieses Verfahrens genügen im Allgemeinen die Hardwarekomponenten einer herkömmlichen Wechselrichteranlage, die allenfalls geringfügig modifiziert werden müssen. Insbesondere genügt für die erforderlichen Kommunikationswege ein einfacher Zweidrahtbus mit einem üblichen, relativ langsamen Busprotokoll.

In einer bevorzugten Ausgestaltung der Erfindung weisen die mehreren einphasigen Wechselrichter jeweils eine Steuervorrichtung auf. Diese Steuervorrichtungen der Wechselrichter erfassen Nulldurchgänge der Wechselspannung der jeweiligen Phase des Mehrphasennetzes, sodass aus den Zeitpunkten der erfassten Nulldurchgänge die jeweiligen Phasen der einphasigen Wechselrichter bestimmbar sind.

Hierzu ist vorzugsweise ferner eine zentrale Steuervorrichtung vorgesehen, die an eine Phase des Mehrphasennetzes angeschlossen ist, an alle einphasigen Wechselrichter ein Startsignal zum Erfassen der Nulldurchgänge der Wechselspannung der jeweiligen Phase des Mehrphasennetzes sendet und aus den Zeitpunkten der von den Steuervorrichtungen der Wechselrichter erfassten Nulldurchgänge der Wechselspannung der jeweiligen Phase des Mehrphasennetzes bestimmt, welcher einphasige Wechselrichter welche Phase des Mehrphasennetzes speist.

Alternativ sendet zu diesem Zweck einer der mehreren einphasigen Wechselrichter, zum Zeitpunkt eines Nulldurchganges der Wechselspannung der jeweiligen Phase ein Netzsignal an alle übrigen der mehreren einphasigen Wechselrichter und aus den Zeitabständen der von den Steuervorrichtungen der übrigen Wechselrichter erfassten Nulldurchgänge der Wechselspannung der jeweiligen Phase des Mehrphasennetzes zum Netzsignal wird bestimmt, welcher einphasige Wechselrichter welche Phase des Mehrphasennetzes speist. Ist eine zentrale Steuervorrichtung an eine Phase des Mehrphasennetzes angeschlossen und aktiviert den einen Wechselrichter zum Senden des Netzsignals, so kann die Phasenzuordnung der Wechselrichter durch die zentrale Steuervorrichtung nicht nur relativ, sondern auch absolut bestimmt werden.

In weiterer Ausgestaltung der Erfindung kommunizieren die mehreren einphasigen Wechselrichter miteinander und/oder mit einer zentralen Steuervorrichtung über einen Kommunikationsbus (z.B. Funk oder Internet).

Gemäß einem zweiten Aspekt wird die oben genannte Aufgabe durch eine Schaltungsanordnung mit den Merkmalen des Anspruchs 7 gelöst. Vorteilhafte Ausgestaltungen und Weiterbildungen der Erfindung sind Gegenstand der abhängigen Ansprüche 8 bis 11.

Die erfindungsgemäße Schaltungsanordnung enthält mehrere einphasige Wechselrichter, die ausgangsseitig jeweils mit einer Phase eines Mehrphasennetzes verbunden sind, und eine zentrale Steuervorrichtung, wobei die mehreren einphasigen Wechselrichter miteinander und mit der zentralen Steuervorrichtung über einen Kommunikationsbus verbunden sind. Die die zentrale Steuervorrichtung ist dabei so ausgebildet, dass sie ermitteln kann, welcher der mehreren einphasigen Wechselrichter welche Phase des Mehrphasennetzes speist, sodass sie die mehreren einphasigen Wechselrichter unter Berücksichtigung ihrer ermittelten Phasen derart steuern kann, dass vorbestimmte Überwachungskriterien des Mehrphasennetzes eingehalten werden.

Zur optimalen Steuerung der Wechselrichter werden neben deren aktuellen Betriebsdaten auch Informationen darüber benutzt, welcher Wechselrichter an welche Phase des Mehrphasennetzes angeschlossen ist. Zur Realisierung genügen die Hardwarekomponenten einer herkömmlichen Wechselrichteranlage, die allenfalls geringfügig modifiziert werden müssen. Insbesondere genügt für den Kommunikationsbus ein einfacher Zweidrahtbus mit einem üblichen, relativ langsamen Busprotokoll.

In einer Ausgestaltung der Erfindung weisen die mehreren einphasigen Wechselrichter jeweils eine Steuervorrichtung auf, die so ausgebildet ist, dass sie Nulldurchgänge der Wechselspannung der jeweiligen Phase des Mehrphasennetzes erfassen kann; und die zentrale Steuervorrichtung ist so ausgebildet, dass sie aus den Zeitpunkten der erfassten Nulldurchgänge die jeweiligen Phasen der einphasigen Wechselrichter bestimmen kann.

In einer Ausführungsform ist zu diesem Zweck die zentrale Steuervorrichtung an eine Phase des Mehrphasennetzes angeschlossen und so ausgebildet, dass sie an alle einphasigen Wechselrichter ein Startsignal zum Erfassen der Nulldurchgänge der Wechselspannung der jeweiligen Phase des Mehrphasennetzes senden kann und aus den Zeitpunkten der von den Steuervorrichtungen der Wechselrichter erfassten Nulldurchgänge der Wechselspannung der jeweiligen Phase des Mehrphasennetzes bestimmen kann, welcher einphasige Wechselrichter welche Phase des Mehrphasennetzes speist.

In einer anderen Ausführungsform ist zu diesem Zweck die zentrale Steuervorrichtung derart ausgebildet, dass sie einen der mehreren einphasigen Wechselrichter veranlassen kann, zum Zeitpunkt eines Nulldurchganges der Wechselspannung der jeweiligen Phase ein Netzsignal an alle übrigen der mehreren einphasigen Wechselrichter (und auch an die zentrale Steuervorrichtung) zu senden, und sie aus den Zeitabständen der von den Steuervorrichtungen der übrigen Wechselrichter erfassten Nulldurchgänge der Wechselspannung der jeweiligen Phase des Mehrphasennetzes zum Netzsignal (und auch dem Netzsignal des einen Wechselrichters) bestimmen kann, welcher einphasige Wechselrichter welche Phase des Mehrphasennetzes speist.

In einer bevorzugten Ausgestaltung der Erfindung ist die zentrale Steuervorrichtung in einen der mehreren einphasigen Wechselrichter integriert.

Die vorliegende Erfindung ist in besonders vorteilhafter Weise für eine Photovoltaikanlage verwendbar, wobei die mehreren einphasigen Wechselrichter jeweils Solarwechselrichter sind, die eingangsseitig mit wenigstens einem Solarmodul verbunden sind, Die vorliegende Erfindung ist aber grundsätzlich auch auf andere Systeme zur Energieeinspeisung von mehreren einphasigen Wechselrichtern in ein Mehrphasennetz anwendbar.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Darstellung des Aufbaus einer Schaltungsanordnung gemäß einem bevorzugten Ausführungsbeispiel der vorliegenden Erfindung; und
- Fig. 2: ein schematisches Diagramm der zeitlichen Verläufe der Wechselspannung UPH einer Phase des Mehrphasennetzes sowie des Netzsignals UT eines zugehörigen Wechselrichters.

Die vorliegende Erfindung wird nachfolgend am Beispiel einer Photovoltaikanlage im Detail erläutert. Es ist aber zu beachten, dass das erfindungsgemäße Verfahren bzw. die erfindungsgemäße Schaltungsanordnung in analoger Weise auch bei anderen Anlagen oder Systemen zur Energieeinspeisung von mehreren einphasigen Wechselrichtern in ein Mehrphasennetz verwendet werden kann. Außerdem wird die vorliegende Erfindung hier am Beispiel eines dreiphasigen Stromversorgungsnetzes näher beschrieben. Es ist aber zu beachten, dass das erfindungsgemäße Verfahren bzw. die erfindungsgemäße Schaltungsanordnung grundsätzlich auch bei Mehrphasennetzen mit nur zwei oder mit mehr als drei Phasen eingesetzt werden können.

Eine Photovoltaikanlage muss im Gebiet der Bundesrepublik Deutschland für die Einspeisung in das öffentliche Stromversorgungsnetz eines Energieversorgungsuntemehmens bestimmte Kriterien einhalten, die in der Einleitung dieser Anmeldung genannt worden sind. Selbstverständlich sind das erfindungsgemäße Verfahren und die erfindungsgemäße Schaltungsanordnung für andere Überwachungskriterien in gleicher Weise geeignet, und sie können insbesondere in allen Staaten zur Einhaltung der jeweiligen Kriterien mittels einer optimierten Steuerung eingesetzt werden.

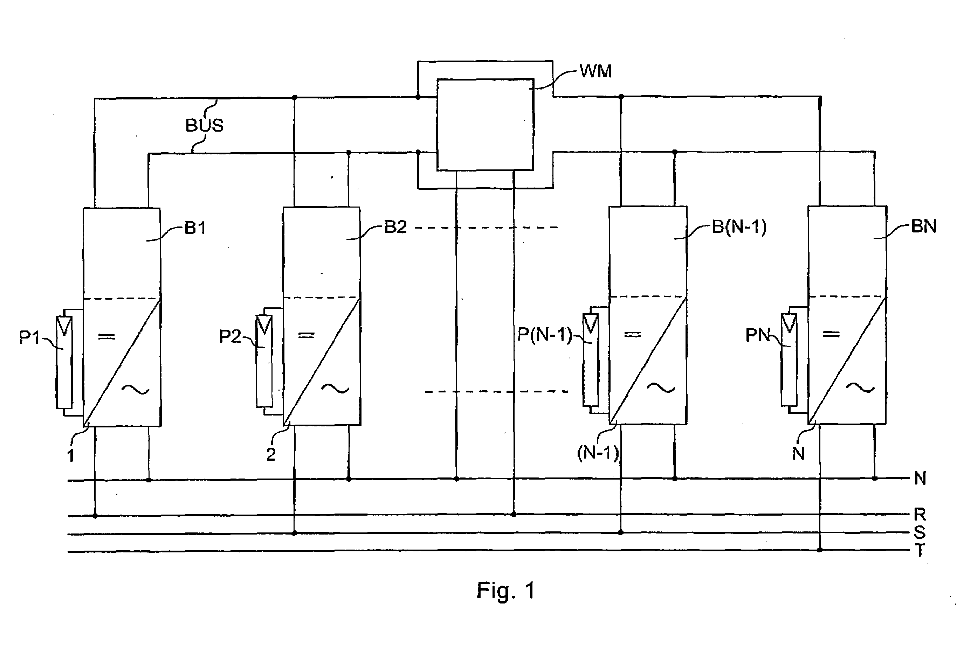

Die in Figur 1 beispielhaft dargestellte Photovoltaikanlage enthält mehrere (hier N) einphasige Wechselrichter 1, 2, ... (N-1), N, die jeweils eingangsseitig mit wenigstens einem Solarmodul bzw. Solarpaneel P1, P2,... P(N-1), PN verbunden sind. Üblicherweise sind jeweils mehrere Solarmodule als so genannter String in Reihe geschaltet, um die vom jeweiligen Wechselrichter benötigte Eingangsspannung zu erreichen.

Alle Wechselrichter 1, 2, ..., (N-1), N sind ausgangsseitig jeweils mit einer Phase R, S, T sowie einem Nullleiter N eines Mehrphasennetzes MN zum Beispiel eines Energieversorgungsuntemehmens verbunden, um die von den Solarmodulen Pn erzeugte und von den Wechselrichtern 1, 2, ..., (N-1), N in Wechselspannung umgewandelte Energie in die jeweilige Phase R, S, T des hier dreiphasigen Mehrphasennetzes MN einzuspeisen.

Die Wechselrichter 1, 2, ..., (N-1), N sind jeweils mit einer Steuervorrichtung B1, B2, ..., B(N-1), BN zum Steuern und Überwachen des Betriebs des jeweiligen Wechselrichters versehen. Die Steuervorrichtungen Bn der Wechselrichter 1, 2, ... (N-1), N enthalten intelligente Schaltungen wie zum Beispiel Mikrocomputer und sind miteinander und mit einer zentralen Steuervorrichtung WM zum Steuern und Überwachen der Photovoltaikanlage über einen Kommunikationsbus BUS verbunden. Als Kommunikationsbus genügt ein einfacher Zweidrahtbus mit einem üblichen, relativ langsamen Busprotokoll. Es sind aber natürlich auch andere Kommunikationsbusse einsetzbar, die zum Beispiel per Funk oder über das Internet funktionieren.

In einer bevorzugten Ausführungsform ist die zentrale Steuervorrichtung WM in eine Steuervorrichtung Bn eines der mehreren Wechselrichter 1, 2, ..., (N-1), N integriert. In diesem Fall kann auf ein separates Steuergerät verzichtet werden und der Aufbau der gesamten Photovoltaikanlage ist vereinfacht.

Die Steuervorrichtungen Bn der Wechselrichter 1, 2, ..., (N-1), N sind so ausgebildet, dass sie die Nulldurchgänge der Wechselspannungen der jeweiligen Phase R, S, T, an die der jeweilige Wechselrichter 1, 2, ..., (N-1), N angeschlossen ist, erfassen können. Außerdem erfassen die Steuervorrichtungen Bn natürlich die aktuellen Betriebsdaten der Wechselrichter und übermitteln sie an die zentrale Steuervorrichtung WM.

Die zentrale Steuervorrichtung WM ist so ausgebildet, dass sie anhand der von den Steuervorrichtungen Bn der Wechselrichter erfassten Nulldurchgänge der jeweiligen Phasenspannungen bestimmen kann, welcher Wechselrichter 1, 2, ..., (N-1), N an welche Phase R, S, T des Mehrphasennetzes angeschlossen ist. Sie steuert dann die mehreren einphasigen Wechselrichter 1, 2, ..., (N-1), N unter Berücksichtigung ihrer aktuellen Betriebsdaten sowie dieser Informationen, welcher Wechselrichter welche Phase des Mehrphasennetzes speist, in optimaler Weise.

Es werden nun zwei Verfahren näher beschrieben, wie die zentrale Steuervorrichtung WM bestimmt, welcher Wechselrichter 1, 2, ..., (N-1), N an welche Phase R, S, T des Mehrphasennetzes MN angeschlossen ist.

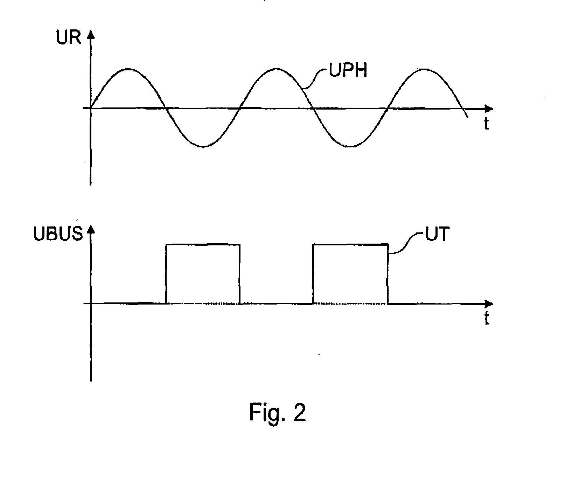

Gemäß einem ersten Verfahren der Erfindung sendet einer der mehreren Wechselrichter 1, 2, ..., (N-1), N - genauer seine Steuervorrichtung Bn - auf einen Befehl der zentralen Steuervorrichtung WM ein Netzsignal oder Toggle-Signal UT über den Kommunikationsbus BUS an alle übrigen Wechselrichter und an die zentrale Steuervorrichtung WM. Wie in Fig. 2 dargestellt, gibt dieses Netzsignal UT zum Beispiel im 50Hz-Takt seines Netzanschlusses die Nulldurchgänge der Wechselspannung UPH der Phase R, S, T an, welche dieser eine Wechselrichter 1, 2, ..., (N-1), N speist.

Die Steuervorrichtungen Bn der übrigen Wechselrichter messen beginnend mit der Rückflanke des Netzsignals UT jeweils die Zeit bis zum Nulldurchgang der Wechselspannung der Phase R, S, T, an welche ihr Wechselrichter 1, 2, ..., (N-1), N angeschlossen ist. Die erfassten Zeitabstände melden die Steuervorrichtungen Bn dann über den Kommunikationsbus BUS an die zentrale Steuervorrichtung WM.

Die zentrale Steuervorrichtung WM kann anhand der erfassten und ihr von den Steuervorrichtungen Bn der Wechselrichter 1, 2, ..., (N-1), N übermittelten Zeitabstände, sowie aus der Kenntnis, an welche Phase R, S, T des Mehrphasennetzes MN sie selbst angeschlossen ist, bestimmen, welcher Wechselrichter welche Phase R, S, T des Mehrphasennetzes MN speist. Die zentrale Steuervorrichtung WM kann dann die von den Steuervorrichtungen Bn der Wechselrichter 1, 2, ..., (N-1), N mitgeteilten aktuellen Betriebsdaten der Wechselrichter den Phasen R, S, T des Mehrphasennetzes MN zuordnen und eine optimale Steuerung aller Wechselrichter 1, 2,

..., (N-1), N vornehmen, wodurch insbesondere gewährleistet werden kann, dass die vorbestimmten Kriterien für das Mehrphasennetz MN eingehalten werden.

Gemäß einem zweiten Verfahren der Erfindung schaltet die zentrale Steuervorrichtung WM zunächst die Steuervorrichtungen Bn aller Wechselrichter 1, 2, ..., (N-1), N in den Empfangsmodus. Dann sendet die zentrale Steuervorrichtung WM ein Startsignal an alle Steuervorrichtungen Bn der Wechselrichter, um einen gemeinsamen Zeitpunkt festzulegen.

Die Steuervorrichtungen Bn der Wechselrichter 1, 2, ..., (N-1), N messen dann die Zeitdauer ab dem Ende des gemeinsamen Startsignals bis zum nächsten Nulldurchgang der Wechselspannung der Phase R, S, T, an die sie angeschlossen sind, und senden die gemessenen Zeitdifferenzen über den Kommunikationsbus BUS an die zentrale Steuervorrichtung WM.

Anhand der so übermittelten Zeitdifferenzen und der Kenntnis ihres eigenen Phasenanschlusses bestimmt die zentrale Steuervorrichtung WM, welcher Wechselrichter 1, 2, ..., (N-1), N welche Phase R, S, T des Mehrphasennetzes speist. Auch in diesem Fall kann die zentrale Steuervorrichtung WM dann die von den Steuervorrichtungen Bn derWechsetnchter 1, 2, ..., (N-1), N mitgeteilten aktuellen Betriebsdaten der Wechselrichter den Phasen R, S, T des Mehrphasennetzes MN zuordnen und eine optimale Steuerung aller Wechselrichter 1, 2, ..., (N-1), N vornehmen. Somit kann auch hier insbesondere gewährleistet werden, dass die vorbestimmten Kriterien für das Mehrphasennetz MN eingehalten werden.

Mit den erfindungsgemäßen Verfahren kann die Photovoltaikanlage optimal und insbesondere unter Vermeidung von Lastschieflagen zwischen den Phasen des Mehrphasennetzes gesteuert werden. Anhand der aktuellen Betriebsdaten der Wechselrichter kann die zentrale Steuervorrichtung natürlich auch andere Kriterien des Mehrphasennetzes, wie Spannungsbereich, Frequenzbereich, Impedanzsprung und dergleichen überwachen.

## Patentansprüche

1. Verfahren zum Steuern der Energieeinspeisung von mehreren einphasigen Wechselrichtern (1 .. N) in ein Mehrphasennetz (MN),
**dadurch gekennzeichnet,**
**dass** ermittelt wird, welcher der mehreren einphasigen Wechselrichter (1.. N) welche Phase (R, S, T) des Mehrphasennetzes (MN) speist, und die mehreren einphasigen Wechselrichter (1 .. N) unter Berücksichtigung ihrer ermittelten Phasen (R, S, T) derart gesteuert werden, dass vorbestimmte Überwachungskriterien des Mehrphasennetzes (MN) eingehalten werden.

2. Verfahren nach Anspruch 1,
**dadurch gekennzeichnet,**
**dass** die mehreren einphasigen Wechselrichter (1 .. N) jeweils eine Steuervorrichtung (B1 .. BN) aufweisen; und
**dass** die Steuervorrichtungen (B1 .. BN) der Wechselrichter (1 .. N) Nulldurchgänge der Wechselspannung der jeweiligen Phase (R, S, T) des Mehrphasennetzes (MN) erfassen, sodass aus den Zeitpunkten der erfassten Nulldurchgänge die jeweiligen Phasen (R, S, T) der einphasigen Wechselrichter (1 .. N) bestimmbar sind.

3. Verfahren nach Anspruch 2,
**dadurch gekennzeichnet,**
**dass** ferner eine zentrale Steuervorrichtung (WM) vorgesehen ist, die an eine Phase des Mehrphasennetzes (MN) angeschlossen ist; und
**dass** die zentrale Steuervorrichtung (WM) an alle einphasigen Wechselrichter (1 .. N) ein Startsignal zum Erfassen der Nulldurchgänge der Wechselspannung der jeweiligen Phase des Mehrphasennetzes (MN) sendet und aus den Zeitpunkten der von den Steuervorrichtungen (B1 .. BN) der Wechselrichter (1 .. N) erfassten Nulldurchgänge der Wechselspannung der jeweiligen Phase (R, S, T) des Mehrphasennetzes (MN) bestimmt, welcher einphasige Wechselrichter (1 .. N) welche Phase (R, S, T) des Mehrphasennetzes (MN) speist.

4. Verfahren nach Anspruch 2,
**dadurch gekennzeichnet,**
**dass** einer der mehreren einphasigen Wechselrichter (1 .. N) zum Zeitpunkt eines Nulldurchganges der Wechselspannung der jeweiligen Phase (R, S, T) ein Netzsignal (UT) an alle übrigen der mehreren einphasigen Wechselrichter (1 .. N) sendet und aus den Zeitabständen der von den Steuervorrichtungen (B1 .. BN) der übrigen Wechselrichter (1 .. N) erfassten Nulldurchgänge der Wechselspannung der jeweiligen Phase (R, S; T) des Mehrphasennetzes (MN) zum Netzsignal (UT) bestimmt wird, welcher einphasige Wechselrichter (1 .. N) welche Phase (R, S, T) des Mehrphasennetzes (MN) speist.

5. Verfahren nach einem der Ansprüche 1 bis 4,
**dadurch gekennzeichnet,**
**dass** die mehreren einphasigen Wechselrichter (1 .. N) miteinander und/oder mit einer zentralen Steuervorrichtung (WM) über einen Kommunikationsbus (BUS) kommunizieren.

6. Verwendung des Verfahrens nach einem der Ansprüche 1 bis 5 für eine Photovoltaikanlage, wobei die mehreren einphasigen Wechselrichter (1 .. N) jeweils Solarwechselrichter sind, die eingangsseitig mit wenigstens einem Solarmodul (P1 .. PN) verbunden sind.

7. Schaltungsanordnung, mit mehreren einphasigen Wechselrichtern (1 .. N), die ausgangsseitig jeweils mit einer Phase (R, S, T) eines Mehrphasennetzes (MN) verbunden sind, und einer zentralen Steuervorrichtung (WM), wobei die mehreren einphasigen Wechselrichter (1 .. N) miteinander und mit der zentralen Steuervorrichtung (WM) über einen Kommunikationsbus (BUS) verbunden sind,
**dadurch gekennzeichnet,**
**dass** die zentrale Steuervorrichtung (WM) so ausgebildet ist, dass sie ermitteln kann, welcher der mehreren einphasigen Wechselrichter (1 .. N) welche Phase (R, S, T) des Mehrphasennetzes (MN) speist, und die mehreren einphasigen Wechselrichter (1 .. N) unter Berücksichtigung ihrer ermittelten Phasen (R, S, T) derart steuern kann, dass vorbestimmte Überwachungskriterien des Mehrphasennetzes (MN) eingehalten werden.

8. Schaltungsanordnung nach Anspruch 7,
**dadurch gekennzeichnet,**
**dass** die mehreren einphasigen Wechselrichter (1 .. N) jeweils eine Steuervorrichtung (B1 .. BN) aufweisen, die so ausgebildet ist, dass sie Nulldurchgänge der Wechselspannung der jeweiligen Phase (R, S, T) des Mehrphasennetzes (MN) erfassen kann; und
**dass** die zentrale Steuervorrichtung (WM) so ausgebildet ist, dass sie aus den Zeitpunkten der erfassten Nulldurchgänge die jeweiligen Phasen (R, S, T) der einphasigen Wechselrichter (1 .. N) bestimmen kann.

9. Schaltungsanordnung nach Anspruch 8,
**dadurch gekennzeichnet,**
**dass** die zentrale Steuervorrichtung (WM) an eine Phase des Mehrphasennetzes (MN) angeschlossen ist; und
**dass** die zentrale Steuervorrichtung (WM) so ausgebildet ist, dass sie an alle einphasigen Wechselrichter (1 .. N) ein Startsignal zum Erfassen der Nulldurchgänge der Wechselspannung der jeweiligen Phase des Mehrphasennetzes (MN) senden kann und aus den Zeitpunkten der von den Steuervorrichtungen (B1 .. BN) der Wechselrichter (1 .. N) erfassten Nulldurchgänge der Wechselspannung der jeweiligen Phase (R, S, T) des Mehrphasennetzes (MN) bestimmen kann, welcher einphasige Wechselrichter (1 .. N) welche Phase (R, S, T) des Mehrphasennetzes (MN) speist.

10. Schaltungsanordnung nach Anspruch 8,
**dadurch gekennzeichnet,**
**dass** die zentrale Steuervorrichtung (WM) so ausgebildet ist, dass sie einen der mehreren einphasigen Wechselrichter (1 .. N) veranlassen kann, zum Zeitpunkt eines Nulldurchganges der Wechselspannung der jeweiligen Phase (R, S, T) ein Netzsignal (UT) an alle übrigen der mehreren einphasigen Wechselrichter (1 .. N) zu senden, und sie aus den Zeitabständen der von den Steuervorrichtungen (B1 .. BN) der übrigen Wechselrichter (1 .. N) erfassten Nulldurchgänge der Wechselspannung der jeweiligen Phase (R, S, T) des Mehrphasennetzes (MN) zum Netzsignal (UT) bestimmen kann, welcher einphasige Wechselrichter (1 .. N) welche Phase (R, S, T) des Mehrphasennetzes (MN) speist.

11. Schaltungsanordnung nach einem der Ansprüche 7 bis 10,
**dadurch gekennzeichnet,**
**dass** die zentrale Steuervorrichtung (WM) in einen der mehreren einphasigen Wechselrichter (1 .. N) integriert ist.

12. Verwendung der Schaltungsanordnung nach einem der Ansprüche 7 bis 11 für eine Photovoltaikanlage, wobei die mehreren einphasigen Wechselrichter (1 .. N) jeweils Solarwechselrichter sind, die eingangsseitig mit wenigstens einem Solarmodul (P1 .. PN) verbunden sind.
